# FASCICULE DE BREVET EUROPEEN

(11) **EP 1 097 053 B1**
(45) Date de publication et mention de la délivrance du brevet: **26.05.2004**
(21) Numéro de dépôt: 99932942.8
(22) Date de dépôt: 21.07.1999
(51) Int. Cl.: B60K 15/03, F17C 1/08

(54) **RESERVOIR POUR VEHICULE**
FAHRZEUGTANK
VEHICLE TANK

(30) Priorité: 21.07.1998 FR 9809260
(43) Date de publication de la demande: 09.05.2001
(73) Titulaire: GIAT INDUSTRIES, 78000 Versailles (FR)
(72) Inventeur: VENGEON, Gérard, F-42580 Letrat (FR); PARISOT, Philippe, F-42390 Villars (FR); SAHUC, Guy, F-42570 Saint Heand (FR); PETITPAS, Eric, F-78570 Andrésy (FR); LEBRUN, Bruno, F-18340 Soye en Septaine (FR); DAMONT, Gérard, F-42390 Villard (FR)
(74) Mandataire: Célanie, Christian
(86) Numéro de dépôt international: PCT/FR1999/001796
(87) Numéro de publication internationale: WO 2000/005090

(56) Documents cités:
- EP-A- 0 901 925
- DE-A- 3 206 430
- FR-A- 917 515
- FR-A- 2 671 542
- GB-A- 2 089 014
- US-A- 2 920 784

## Description

Le secteur technique de la présente invention est celui des réservoirs pour véhicule en particulier les véhicules roulant au gaz de pétrole liquéfié dit GPL.

Un réservoir selon le préambule de la revendication 1 est connu du document GB-A-2 089 014.

Les réservoirs GPL connus sur le marché sont généralement des réservoirs métalliques de forme cylindrique avec des extrémités en forme de portion de sphère. Cette forme permet de façon connue d'assurer une répartition uniforme des contraintes sur la surface interne du réservoir. L'inconvénient de cette forme réside dans le fait que le logement de réception doit être prévu dans le véhicule et bien souvent ces réservoirs sont montés à la place de la roue de secours. De plus, la forme cylindrique s'adapte mal à une optimisation du volume disponible dans le véhicule. Il en résulte une perte de volume utile au niveau du réservoir et/ou au niveau du véhicule. On notera encore que ces réservoirs sont lourds car leur paroi doit être suffisamment épaisse pour résister à la pression.

Le but de la présente invention est de proposer des réservoirs légers s'adaptant dans n'importe quelle forme de logement, tout en résistant à la pression exercée par le fluide sous pression.

L'invention a donc pour objet un réservoir pour véhicule destiné à contenir un fluide sous pression, caractérisé en ce qu'il est constitué d'un ensemble d'éléments métalliques obtenus par emboutissage, solidaires les uns des autres, et un fond rapporté sur chacun des éléments d'extrémité.

Chacun des éléments se présente sous la forme d'un godet et délimite un volume ouvert de forme quelconque.

Chaque godet comprend une paroi latérale et une base munie de perforations ordonnées de manière quelconque.

Les perforations occupent entre environ 10 et 90% de la surface de la base.

Les éléments sont réalisés à partir d'une feuille métallique d'épaisseur comprise entre environ 1 mm et 3 mm.

Chaque élément est muni d'une lèvre dans laquelle s'engage la base de l'élément adjacent.

La lèvre est soudée sur la base.

Un avantage de la présente invention réside dans la mise en oeuvre de technologie classique d'emboutissage et de soudage de feuilles métalliques minces.

Un autre avantage réside dans la variété de formes susceptibles d'être réalisées y compris des combinaisons de formes différentes pour un même réservoir.

Un autre avantage de l'invention réside dans l'adaptation de la forme du réservoir à celle de son emplacement de destination dans le véhicule.

D'autres caractéristiques, détails et avantages de l'invention apparaîtront plus clairement à la lecture du complément de description qui va suivre de modes de réalisation donnés à titre d'exemple en relation avec des dessins sur lesquels :
- la figure 1 est une vue en perspective d'un ensemble d'éléments métalliques,
- les figures 2 à 4 montrent des exemples de réalisation d'un élément,
- la figure 5 montre l'assemblage du réservoir selon l'invention.

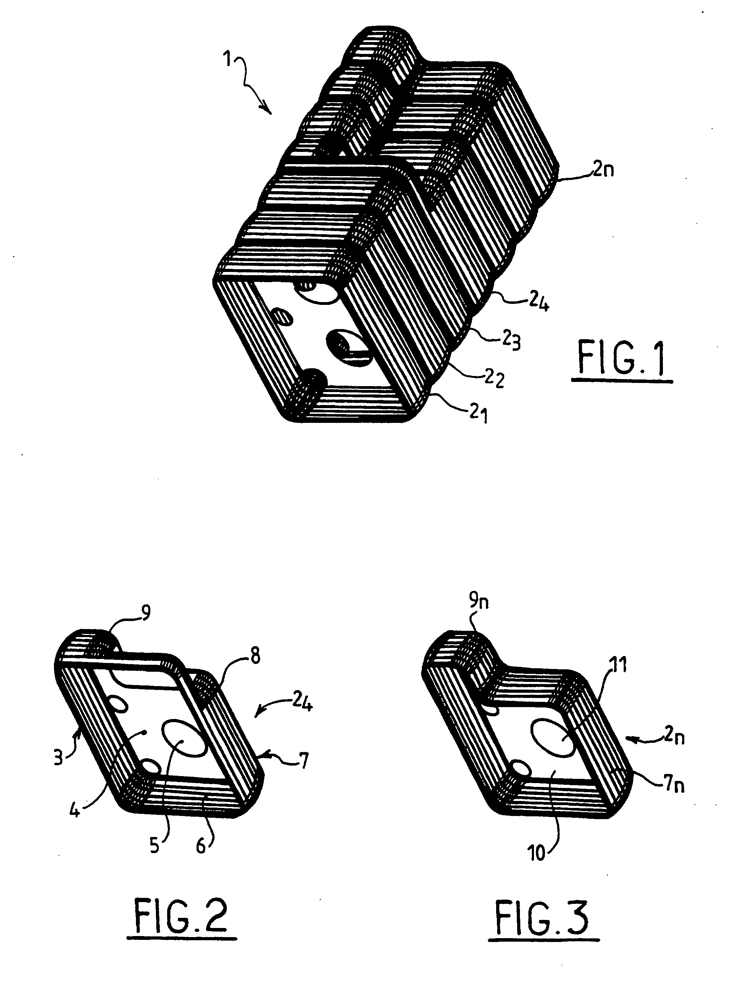

Sur la figure 1, on a représenté un réservoir sous la forme d'un empilement d'éléments 2₁, 2₂,...,2ₙ encastrés les uns dans les autres pour constituer un ensemble continu. Celui-ci est constitué de trois premiers éléments (2₁-2₃) de forme sensiblement parallélélépipédique, de trois derniers éléments de forme plus complexe et d'un élément 2₄ intermédiaire de liaison. Chaque élément 2₁-2ₙ se présente sous la forme d'un godet délimitant un volume ouvert de forme quelconque. Chaque élément est obtenu par emboutissage d'une feuille métallique à l'aide d'une presse, ce qui constitue une technologie tout à fait classique procurant une grande simplification de la réalisation du réservoir.

La figure 2 représente l'élément de jonction 2₄ qui permet de passer d'une forme de réservoir présentant, par exemple, une partie parallélépipédique à une forme constituée de deux parties parallélépipédiques. L'élément 2₄ ou godet comprend une paroi latérale 3 et une base 4 munie de perforations 5. La paroi latérale 3 comprend une première portion 6 de paroi parallélépipédique et une seconde portion 7 constituée de deux parois parallélépipédiques 8 et 9 de section différente. Bien entendu, cet élément est obtenu par emboutissage à partir d'une feuille métallique unique.

Sur la figure 3, on a représenté un élément 2ₙ s'adaptant sur la portion 7 de l'élément 2₄. L'élément 2ₙ, également en forme de godet, comprend une première portion 7ₙ de paroi latérale et une seconde portion 9ₙ de paroi latérale raccordées à une base 10 munie de perforations 11.

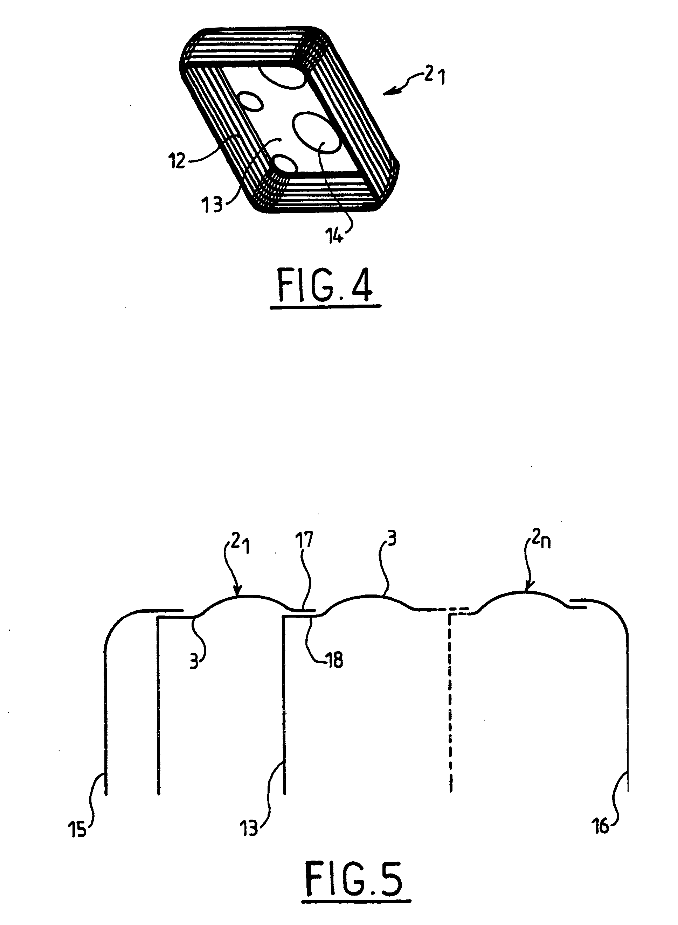

Sur la figure 4, on a représenté un élément 2₁ destiné à s'adapter dans la portion 6 de l'élément intermédiaire 2₄. Cet élément est constitué d'une paroi latérale 12 continue, de forme parallélépipédique et d'une base 13 munie de perforations 14.

Bien entendu, il est possible de réaliser un réservoir constitué uniquement d'éléments 2₁ ou d'éléments 2ₙ, ou bien encore d'une forme quelconque de godet obtenue par emboutissage.

On comprend que la base de chaque élément 2₁,...,2ₙ constitue un raidisseur permettant d'obtenir une structure tout à fait rigide apte à résister aux pressions engendrées par le gaz de pétrole liquéfié, même en cas de déformation du réservoir sous l'effet des sollicitations crées par un choc du véhicule ou l'augmentation de pression en cas d'incendie. Enfin, le réservoir selon l'invention est d'un coût relativement modeste et fabricable en grande série à partir de feuille métallique mince, de 1 mm à 3 mm d'épaisseur.

La figure 5 illustre un réservoir R constitué des éléments 2₁ à 2ₙ, d'un fond 15 rapporté sur l'élément 2₁ et d'un fond 16 rapporté sur l'élément 2ₙ. A cette fin, la paroi latérale 3 de chaque élément est prolongée par une lèvre 17 dans laquelle on engage la base 18 de l'élément adjacent. On réalise ensuite une soudure de la lèvre 17 sur la base 18. Puis, on adapte les deux fonds 15 et 16 sur les éléments d'extrémité 2₁ et 2ₙ que l'on soude également sur ces éléments.

On notera que les perforations 5, 11 ou 14 peuvent être de dimension variable et occuper entre environ 10 et 90% de la surface de chaque base.

Bien entendu, la hauteur de chaque élément peut être adaptée et un même réservoir peut être réalisé avec des éléments de hauteur différente.

## Revendications

1. Réservoir pour véhicule destiné à contenir un fluide sous pression, **caractérisé en ce qu'**il est constitué d'un ensemble d'éléments métalliques obtenus par emboutissage, solidaires les uns des autres, et un fond (15,16) rapporté sur chacun des éléments d'extrémité.

2. Réservoir pour véhicule selon la revendication 1, **caractérisé en ce que** chacun des éléments se présente sous la forme d'un godet et délimite un volume ouvert de forme quelconque.

3. Réservoir pour véhicule selon la revendication 2, **caractérisé en ce que** chaque godet (2₁,..., 2ₙ) comprend une paroi latérale et une base (4) munie de perforations (5) ordonnées de manière quelconque.

4. Réservoir pour véhicule selon la revendication 3, **caractérisé en ce que** les perforations (5) occupent entre environ 10 et 90% de la surface de la base (4).

5. Réservoir pour véhicule selon l'une quelconque des revendications 1 à 4, **caractérisé en ce que** les éléments sont réalisés à partir d'une feuille métallique d'épaisseur comprise entre environ 1mm et 3 mm.

6. Réservoir pour véhicule selon l'une quelconque des revendications 1 à 5, **caractérisé en ce que** chaque élément (2₁,...,2ₙ) est muni d'une lèvre (17) dans laquelle s'engage la base de l'élément adjacent.

7. Réservoir selon la revendication 6, **caractérisé en ce que** la lèvre (17)est soudée sur la base(4).

## Patentansprüche

1. Tank für ein Fahrzeug, der dafür vorgesehen ist, eine unter Druck stehende Flüssigkeit aufzunehmen, **dadurch gekennzeichnet, dass** er aus einer Menge von Metallelementen, die durch Ziehen erzielt werden und fest miteinander verbunden sind, und einen Boden (15, 16), der an jedes der End-Elemente angesetzt ist, gebildet wird.

2. Tank für ein Fahrzeug nach Anspruch 1, **dadurch gekennzeichnet, dass** jedes der Elemente sich in der Form eines Bechers darstellt und ein offenes Volumen beliebiger Form abgrenzt.

3. Tank für ein Fahrzeug nach Anspruch 2, **dadurch gekennzeichnet, dass** jeder Becher (2₁,...,2ₙ) eine Seitenwand und eine Basis (4), die mit in beliebiger Weise angeordneten Durchbohrungen (5) versehen ist, umfasst.

4. Tank für ein Fahrzeug nach Anspruch 3, **dadurch gekennzeichnet, dass** die Durchbohrungen (5) ungefähr zwischen 10 und 90% der Fläche der Basis (4) einnehmen.

5. Tank für ein Fahrzeug nach irgendeinem der Ansprüche 1 bis 4, **dadurch gekennzeichnet, dass** die Elemente aus einem Metallblech hergestellt sind, dessen Dicke zwischen ungefähr 1 mm und 3 mm liegt.

6. Tank für ein Fahrzeug nach irgendeinem der Ansprüche 1 bis 5, **dadurch gekennzeichnet, dass** jedes Element (2₁,...,2ₙ) mit einem Rand (17) versehen ist, in welchen die Basis des benachbarten Elementes eingreift.

7. Tank nach Anspruch 6, **dadurch gekennzeichnet, dass** der Rand (17) an die Basis (4) angeschweißt ist.

## Claims

1. A tank for a vehicle, intended to contain a pressurised fluid, wherein it is constituted by an assembly of metallic elements obtained by drawing, integral with one another, and a bottom (15, 16) on each of the end elements.

2. A tank for a vehicle according to Claim 1, wherein each of the elements is pan-shaped and delimits an open volume of any shape.

3. A tank for a vehicle according to Claim 2, wherein each pan (2₁,... 2ₙ) comprises a side wall and base (4) provided with perforations (5) organised in any manner.

4. A tank for a vehicle according to Claim 3, wherein the perforations (5) cover between 10 and 90% of the base's (4) surface.

5. A tank for a vehicle according to any one of Claims 1 to 4, wherein the elements are made from a sheet of metal of a thickness of between 1 mm and 3 mm.

6. A tank for a vehicle according to any one of Claims 1 to 5, wherein each element (2₁,... 2ₙ) is provided with a lip (17) onto which the base of the adjacent element engages.

7. A tank according to Claim 6, wherein the lip (17) is welded at the base (4).
